# EUROPÄISCHE PATENTSCHRIFT

(11) **EP 1 634 676 B1**
(45) Veröffentlichungstag und Bekanntmachung des Hinweises auf die Patenterteilung: **19.08.2009**
(21) Anmeldenummer: 04021279.7
(22) Anmeldetag: 08.09.2004
(51) Int. Cl.: B23Q 1/58, B23Q 1/62, B23Q 11/00, B23Q 39/02, B23Q 7/04, B23B 3/16, B23B 3/20

(54) **Vertikal-Drehmaschine**
Vertical Lathe
Tour vertical

(43) Veröffentlichungstag der Anmeldung: 15.03.2006
(73) Patentinhaber: Hessapp GmbH, 65232 Taunusstein (DE)
(72) Erfinder: Lange, Werner, 65597 Hünfelden (DE); Noss, Hans, 65307 Bad Schwalbach (DE); Kellert, Hans-Dieter, 65232 Taunusstein (DE)
(74) Vertreter: Rau, Manfred

(56) Entgegenhaltungen:
- EP-A- 0 953 403
- DE-A1- 10 237 191
- DE-A1- 19 900 294
- US-A- 4 742 739

## Beschreibung

Die Erfindung betrifft eine Vertikal-Drehmaschine, insbesondere zur Bearbeitung von Rädern, Felgen, Bremsscheiben, Bremstrommeln oder dergleichen.

Eine aus der DE 199 00 294 B4 bekannte Vertikal-Drehmaschine stellt den nächstliegenden Stand der Technik dar. Diese Vertikal-Drehmaschine weist ein Maschinen-Gestell mit einer am Maschinen-Gestell angeordneten Werkstück-Aufnahme-Spindel auf. Letztere weist an ihrem unteren Ende eine Werkstück-Spann-Einrichtung zur Aufnahme eines Werkstücks auf. Sie ist mittels eines Spindel-Antriebs-Motors um eine vertikale Drehachse drehantreibbar und mittels eines Antriebs-Motors nur in der vertikalen Richtung verschiebbar. Die Vertikal-Drehmaschine weist weiterhin einen ersten Werkzeugträger zur Aufnahme eines ersten Werkzeugs auf, der in einer horizontalen Richtung mittels eines Antriebs-Motors und in einer vertikalen Richtung mittels eines entsprechenden Antriebs-Motors verschiebbar ist. Es ist ein zweiter Werkzeugträger zur Aufnahme eines zweiten Werkzeugs vorgesehen, der mittels eines Antriebs-Motors in einer horizoritalen Richtung und mittels eines weiteren Antriebs-Motors in einer vertikalen Richtung verschiebbar ist. Dadurch, dass die Werkstück-Aufnahme-Spindel und der gegenüberliegende Reitstock vertikal zueinander einstellbar sind, können unterschiedlich lange Werkstücke eingespannt werden. Durch die Anordnung der Werkzeugträger auf Kreuzschlitten ist eine Bearbeitung einer eingespannten Welle über ihre volle Länge und radial zur Drehachse gleichzeitig mittels zweier voneinander unabhängig antreibbarer Werkzeuge möglich. Diese Maschine ist aufwändig und insbesondere einer automatischen Beladung nur schwer zugänglich.

Aus der DE 34 16 660 C2 ist eine Vertikal-Drehmaschine bekannt, bei der eine Werkstück-Spanneinrichtung an einer vertikalen Werkstück-Aufnahme-Spindel angebracht ist, die an einem in vertikaler Z-Richtung und horizontaler X-Richtung verschiebbaren Kreuzschlitten angebracht ist. Sie kann zwischen einem Werkstück Be- und Entlade-Bereich und einem Arbeitsbereich jeweils in X-Richtung verfahren werden. Im Arbeitsbereich ist ein Werkzeug angeordnet, dem gegenüber Relativbewegungen zwischen Werkstück und Werkzeug über die Verschiebbarkeit der Werkstück-Aufnahme-Spindel in vertikaler und horizontaler Richtung erzeugt werden. Diese Ausgestaltung ist konstruktiv aufwändig und erlaubt insbesondere keine hohen Bearbeitungsgeschwindigkeiten, d.h. niedrige Taktzeiten für die vollständige Bearbeitung einschließlich Zuführung und Entnahme eines Werkstücks.

Aus der DE-PS 863 434 ist eine Vertikal-Drehmaschine bekannt, in deren Arbeitsbereich mehrere unabhängig voneinander horizontal und vertikal verschiebbare Werkzeugträger angeordnet sind.

Aus der DE 102 37 191 C2 ist eine Vertikal-Drehmaschine bekannt, deren Werkstück-Aufnahme-Spindel in vertikaler Z-Richtung und horizontaler X-Richtung verschiebbar ist. Ein erstes Werkzeug ist ortsfest am Maschinen-Gestell angebracht. Die Relativbewegung des Werkstücks gegenüber dem Werkzeug erfolgt über die 2-Achsen-Bewegbarkeit des Werkstücks. Ein zweites Werkzeug ist in horizontaler Richtung und vertikaler Richtung verschiebbar. Die Zuführung und Abführung von Werkstücken erfolgt durch entsprechendes Verfahren der Werkstück-Aufnahme-Spindel mit dem Werkstück zwischen einem Be- und Entlade-Bereich und einem Arbeitsbereich. Diese Ausgestaltung lässt keine niedrigen Taktzeiten zu.

In der nicht vorveröffentlichten DE 10 2004 012 562.7 ist eine Vertikal-Drehmaschine beschrieben, die zwei vertikal verschiebbare Werkstück-Aufnahme-Spindeln und jeweils einen jeder Werkstück-Aufnahme-Spindel zugeordneten horizontal verschiebbaren Werkzeugträger aufweist. Die Drehmaschine weist eine Lade-Einrichtung auf, mittels derer aus einem hinteren Be- und Entlade-Bereich zu bearbeitende Werkstücke zugeführt und in den bearbeitete Werkstücke abgeführt werden.

Der Erfindung liegt die Aufgabe zugrunde, eine Vertikal-Drehmaschine zu schaffen, mittels derer mit einfachen Mitteln eine Bearbeitung von Werkstücken in sehr kurzen Taktzeiten möglich ist und die wahlweise mit einer Lade-Einrichtung ausgestaltet werden kann.

Diese Aufgabe wird erfindungsgemäß durch die Merkmale im Anspruch 1 gelöst. Die Relativbewegung zwischen dem Werkstück und dem ersten Werkzeug in Z1- und X1-Richtung wird durch die gesteuerte Verschiebbarkeit der Werkstück-Aufnahme-Spindel nur in Z1-Richtung einerseits und des nur in X1-Richtung verschiebbaren ersten Werkzeugträgers erreicht. Die Relativbewegung zwischen dem zweiten Werkzeug und dem Werkstück wird zum einen durch die Verschiebbarkeit des Werkzeugs in X2-Richtung und zum anderen durch die einander überlagerten Bewegungen der Werkstück-Aufnahme-Spindel in Z1-Richtung und des zweiten Werkzeugs in Z2-Richtung erreicht. Der erste Werkzeugträger ist also nur in einer Achse bewegbar. Die Koordination der gesamten Ansteuerungen während des Bearbeitungsprozesses erfolgt über eine zentrale Steuer-Einheit, in der Regel also eine CNC-Steuerung. Die Drehmaschine ist im Arbeitsbereich nach unten offen, so dass ein guter Späne-Abtransport möglich ist, was insbesondere bei zum Brennen neigenden Materialien, wie Magnesium, wichtig ist.

Die Ansprüche 2, 3, 4 geben vorteilhafte konstruktive Ausgestaltungen wider. Durch die Weiterbildung nach Anspruch 5 wird eine günstige und ungestörte Späneabfuhr erleichtert.

Durch die weitere Ausgestaltung nach Anspruch 6 wird die wahlweise Anordnung einer Lade-Einrichtung ermöglicht, die in besonders einfacher Weise nach Anspruch 7 ausgestaltet sein kann. Insbesondere die Maßnahme nach Anspruch 8 ermöglicht eine wahlweise Anordnung einer solchen Lade-Einrichtung.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Frontansicht einer Vertikal-Drehmaschine nach der Erfindung ohne Lade-Einrichtung,
- Fig.2: einen vertikalen Querschnitt durch die Drehmaschine entsprechend der Schnittlinie II - II in Fig. 1,
- Fig.3: einen vertikalen Querschnitt durch die Drehmaschine nach Fig. 1 gemäß der Schnittlinie III - III in Fig. 1,
- Fig. 4: eine Frontansicht einer Drehmaschine nach der Erfindung, die sich von der nach den Fig. 1 bis 3 durch eine zusätzliche Lade-Einrichtung unterscheidet,
- Fig. 5: einen vertikalen Querschnitt durch die Drehmaschine nach Fig. 4 entsprechend der Schnittlinie V - V in Fig. 4,
- Fig. 6: einen vertikalen Querschnitt durch die Drehmaschine nach Fig. 4 entsprechend der Schnittlinie VI - VI in Fig. 4,
- Fig. 7: eine Drehmaschine in einer Darstellung gemäß den Figuren 1 und 4 während der Bearbeitung eines Werkstücks,
- Fig. 8: eine Drehmaschine in einer Darstellung gemäß Fig. 5 bei der Entnahme eines bearbeiteten Werkstücks und

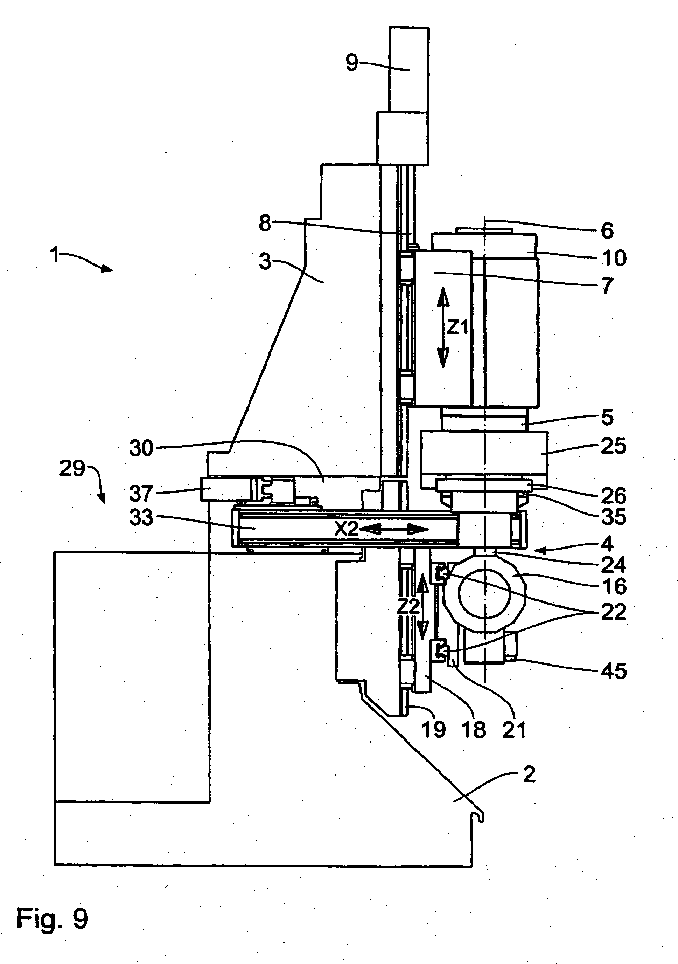

- Fig. 9: eine Drehmaschine in einer Darstellung gemäß Fig. 6 bei der Beschickung mit einem zu bearbeitenden Werkstück.

Die in der Zeichnung dargestellte Vertikal-Drehmaschine weist ein Maschinen-Gestell 1 auf, das aus einem im Wesentlichen quaderförmigen Untergestell 2 und einem hierauf befindlichen Obergestell 3 besteht, die einteilig miteinander ausgebildet sind. An der Vorderseite des Maschinen-Gestells 1 befindet sich ein Arbeitsbereich 4. Im Arbeitsbereich 4 ist am Obergestell 3 eine Werkstück-Aufnahme-Spindel 5 angeordnet, deren Drehachse 6 vertikal angeordnet ist. Sie ist auf einem Spindel-Schlitten 7 gelagert, der auf am Obergestell 3 angebrachten Führungsschienen 8 vertikal verschiebbar ist. Der Verschiebeantrieb des Spindel-Schlittens 7 in einer vertikalen Z1-Richtung erfolgt mittels eines am Obergestell 3 angebrachten elektrischen Z1-Antriebs-Motors 9. Der Drehantrieb der Spindel 5 erfolgt mittels eines elektrischen Spindel-Antriebs-Motors 10, der am Schlitten 7 angebracht ist. Der Spindel-Schlitten 7 mit der Spindel 5 befindet sich - vom Arbeitsbereich 4 her gesehen - etwa in der Mitte des Maschinen-Gestells 1. Die Spindel 5 ist also nur vertikal verschiebbar.

Am Untergestell 2 befindet sich ein horizontal in X1-Richtung verschiebbarer X1-Schlitten 11, der auf horizontalen Führungsschienen 12 verschiebbar gelagert ist. Der Verschiebeantrieb erfolgt mittels eines am Untergestell 2 angebrachten elektrischen X1-Antriebs-Motors 13. Am X1-Schlitten 11 ist auf der der Drehachse 6 zugewandten Seite ein revolverartiger erster Werkzeugträger 14 angebracht, der wahlweise unterschiedliche erste Werkzeuge 15 aufnehmen kann.

Spiegelsymmetrisch zum ersten Werkzeugträger 14 ist ein zweiter Werkzeugträger 16 vorgesehen, der auf einem Kreuz-Schlitten 17 gelagert ist.

Der Kreuz-Schlitten 17 weist einen in Z2-Richtung verschiebbaren Z2-Schlitten 18 auf, der auf Führungsschienen 19 am Untergestell 2 in vertikaler Z2-Richtung verschiebbar gelagert ist. Der Antrieb des Z2-Schlittens erfolgt mittels eines am Untergestell 2 angebrachten elektrischen Z2-Antriebs-Motors 20. Auf dem Z2-Schlitten 18 ist ein X2-Schlitten 21 auf Führungsschienen 22 in horizontaler X2-Richtung verschiebbar gelagert. Der Verschiebeantrieb erfolgt mittels eines elektrischen X2-Antriebs-Motors 23, der an dem Z2-Schlitten 18 angebracht ist. Der zweite Werkzeugträger 16 ist am X2-Schlitten 21 angebracht und zwar auf der der Drehachse 6 zugewandten Seite. Er ist gleichartig wie der erste Werkzeugträger 14 ausgestaltet und dient zur wahlweisen Aufnahme unterschiedlicher zweiter Werkzeuge 24.

An der Unterseite der Werkstück-Aufnahme-Spindel 5 befindet sich eine Werkstück-Spann-Einrichtung 25 zur Aufnahme eines zu bearbeitenden Werkstücks 26. Die vertikale Drehachse 6 und die Eingriffsstelle 27 des ersten Werkzeugs 15 und die Eingriffsstelle 28 des zweiten Werkzeugs 24 befinden sich in einer gemeinsamen vertikalen X-Z-Ebene.

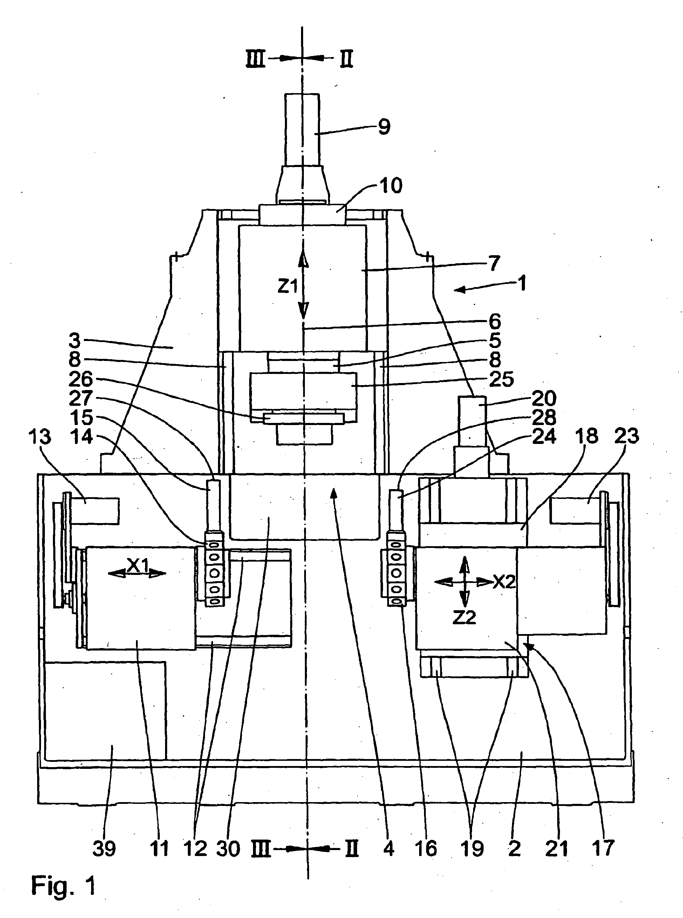

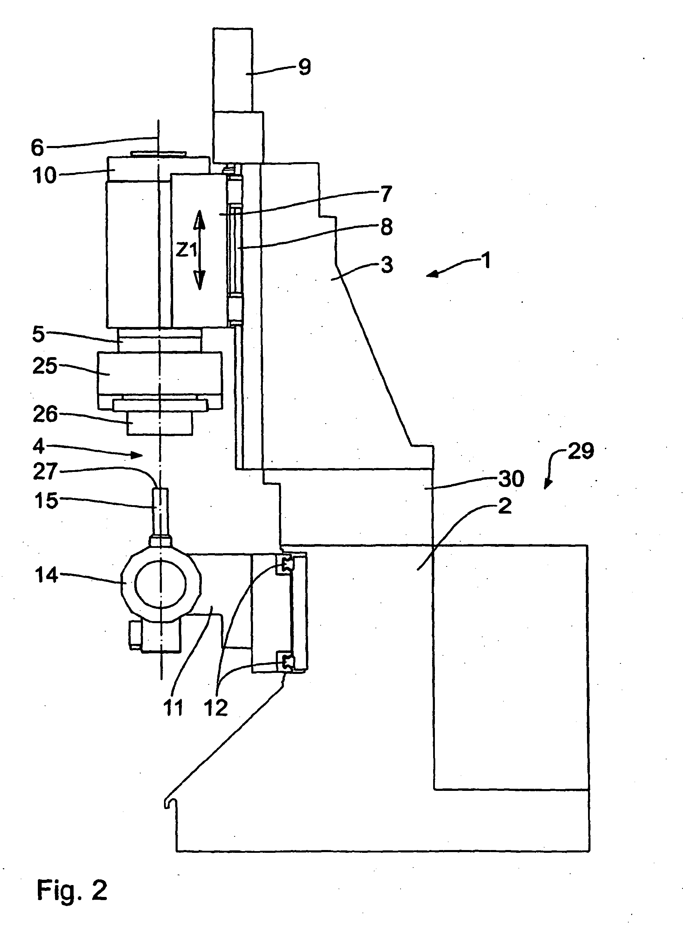

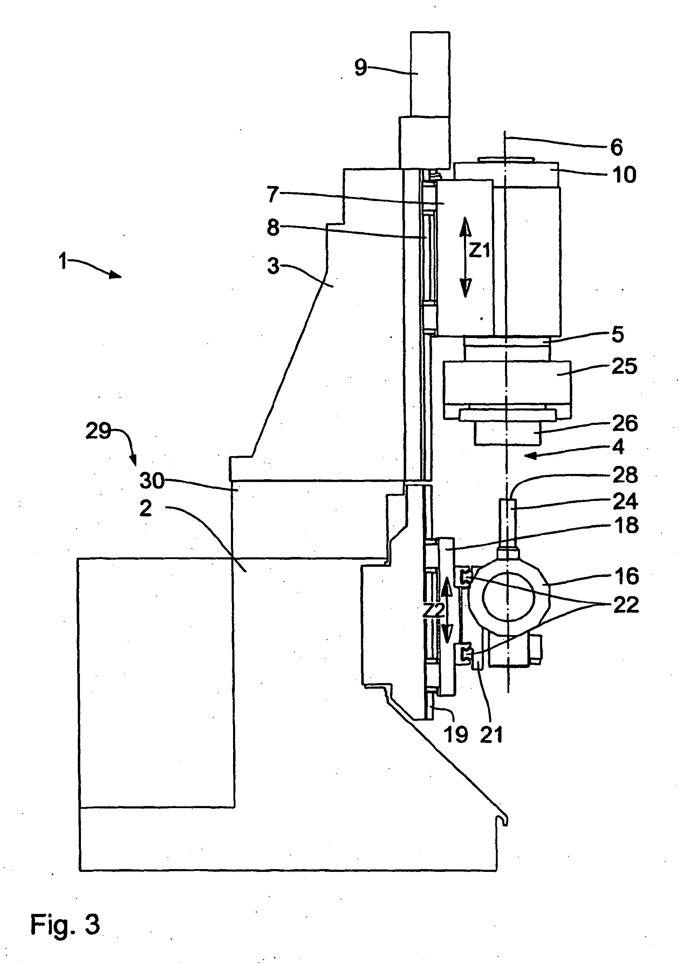

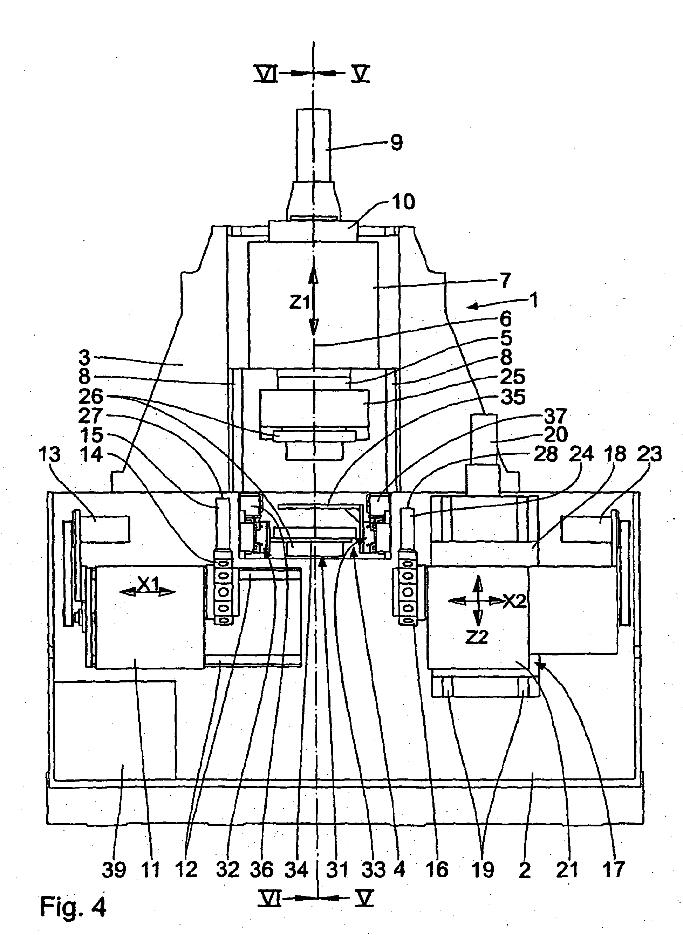

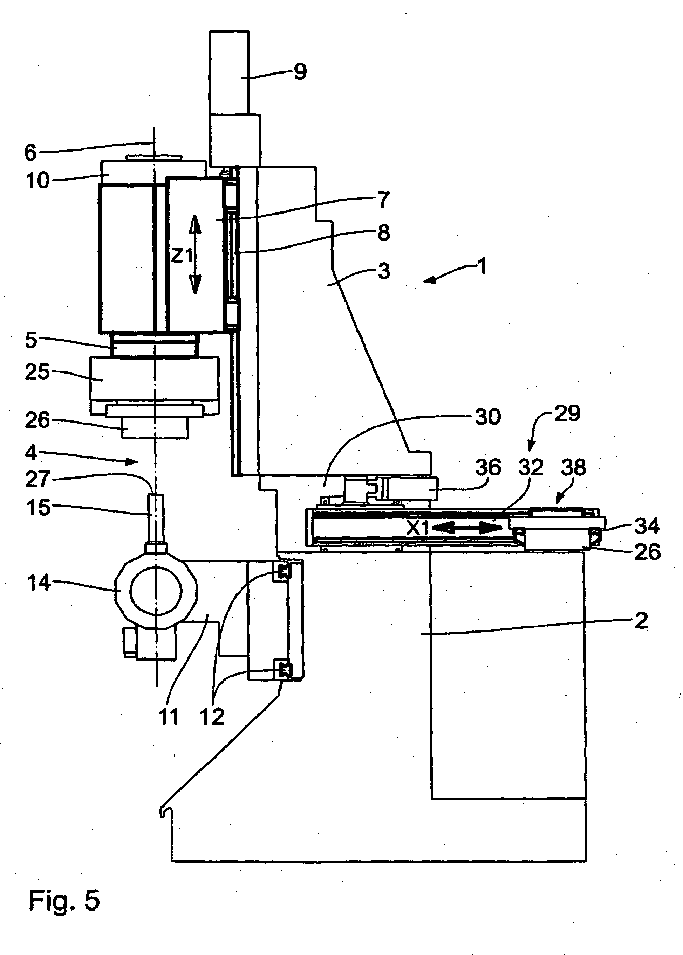

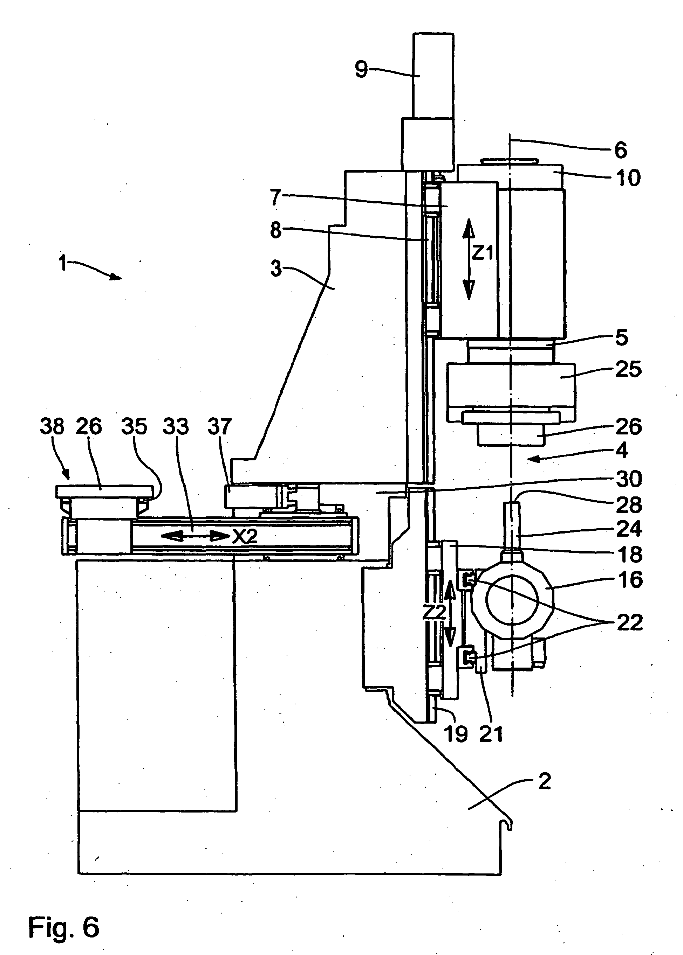

Vom Arbeitsbereich 4 zu einem Be- und Entlade-Bereich 38 an der Rückseite 29 des Maschinen-Gestells 1 erstreckt sich ein Lade-Tunnel 30, in dem wahlweise eine Lade-Einrichtung 31 angeordnet werden kann. Während beim Ausführungsbeispiel nach den Figuren 1 bis 3 eine solche Lade-Einrichtung nicht vorgesehen ist, ist eine Lade-Einrichtung 31 beim Ausführungsbeispiel nach den Figuren 4 bis 6 vorgesehen. Sie weist einen ersten Lade-Schlitten 32 und einen zweiten Lade-Schlitten 33 auf, die eine erste Werkstück-Aufnahme 34 bzw. eine zweite Werkstück-Aufnahme 35 aufweisen. Die Lade-Schlitten 32, 33 sind mittels jeweils eines ersten Schlitten-Verschiebe-Motors 36 bzw. eines zweiten Schlitten-Verschiebe-Motors 37 antreibbar. Wie insbesondere Fig. 4 erkennen lässt, sind die Werkstück-Aufnahmen 34, 35 in Z1-Richtung übereinander angeordnet, so dass sie gegeneinander verfahren werden können. Die Lade-Schlitten 32, 33 sind teleskopierbar ausgebildet, so dass die Werkstück-Aufnahmen 34, 35 von dem hinteren Be- und Entlade-Bereich 38 zum Arbeitsbereich 4 und umgekehrt verfahren werden können. Derartige Ausgestaltungen der Lade-Schlitten 32 bzw. 33 sind bekannt.

Die Ansteuerung der zahlreichen Antriebe, nämlich des Z1-Antriebs-Motors 9, des Spindel-Antriebs-Motors 10, des X1-Antriebs-Motors 13, des Z2-Antriebs-Motors 20, des X2-Antriebs-Motors 23, der Werkstück-Spann-Einrichtung 25 und gegebenenfalls der Schlitten-Verschiebe-Motoren 36, 37 erfolgt mittels einer nur angedeuteten Steuer-Einheit 39, die üblicherweise als CNC-Steuerung ausgebildet ist.

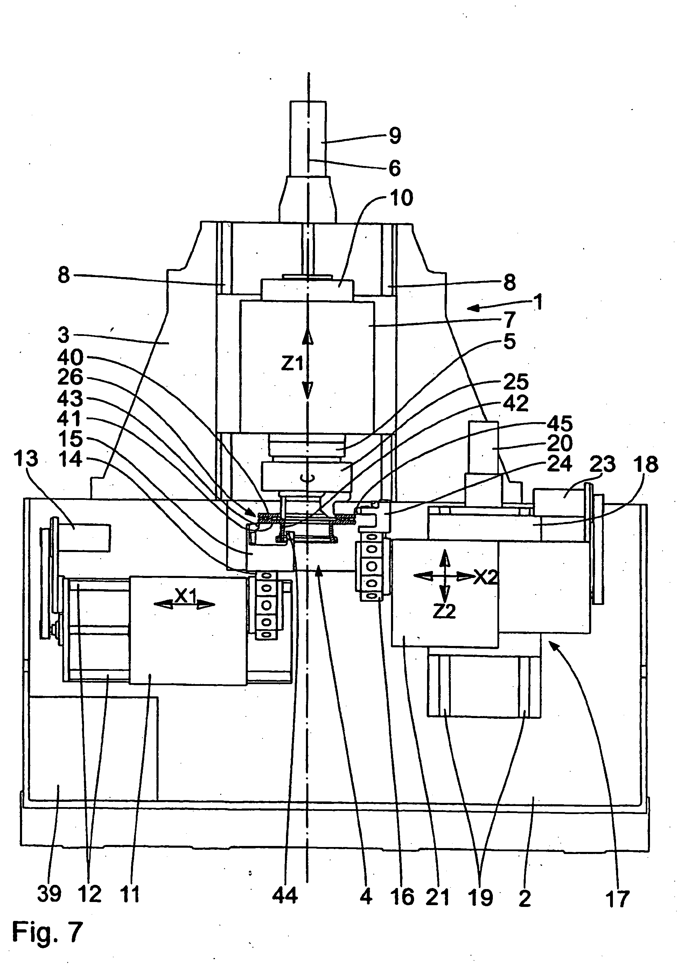

Aus Fig. 7 ergibt sich die Bearbeitung eines Werkstücks 26, wobei es sich bei dem dort dargestellten Werkstück 26 um eine Bremsscheibe handelt. Diese weist eine ebene obere Bremsfläche 40, eine ebene untere Bremsfläche 41 und eine innere zylindrische Zentrierfläche 42 auf, die spanabhebend bearbeitet werden müssen. Das erste Werkzeug 15 ist als Doppelwerkzeug ausgebildet, d.h. es weist eine erste Schneide 43 zur Bearbeitung der unteren Bremsfläche 41 und eine zweite Schneide 44 zur Bearbeitung der Zentrierfläche 42 auf. Das zweite Werkzeug 24 weist eine Schneide 45 auf, die zur Bearbeitung der oberen Bremsfläche 40 dient.

Die Bearbeitung erfolgt in der Weise, dass der X1-Schlitten 11 mit dem Werkzeug 15 in X1-Richtung unter das Werkstück 26 verfahren wird. Das Werkstück 26 wird um die Drehachse 6 drehangetrieben und der Spindel-Schlitten 7 in Z1-Richtung nach unten verfahren. Die zweite Schneide 44 schneidet hierbei die Zentrierfläche 42. Anschließend wird mit der ersten Schneide 43 die untere Bremsfläche 41 und mit der Schneide 45 die obere Bremsfläche 40 bearbeitet. Hierzu ist der Spindel-Schlitten 7 in Z1-Richtung in die Position verfahren worden, die der Eingriffsstellung der ersten Schneide 43 zur Bearbeitung der unteren Bremsfläche 41 entspricht. Durch Verfahren des Z2-Schlittens 18 wird die Schneide 45 in die Position verbracht, die zur Bearbeitung der oberen Bremsfläche 40 notwendig ist. Anschließend werden der X1-Schlitten 11 und der X2-Schlitten 21 bei stehendem Spindel-Schlitten 7 in Richtung zur Drehachse 6 verfahren, wodurch gleichzeitig die untere Bremsfläche 41 und die obere Bremsfläche 40 bearbeitet werden. Selbstverständlich ist auch jede Art der überlagerten Bewegungen möglich.

Wenn die Beladung der Werkstück-Spann-Einrichtung 25 nicht von Hand oder von vom über einen Roboter oder dergleichen erfolgt, sondern mittels der Lade-Einrichtung 31, dann geht dies wie folgt vonstatten:

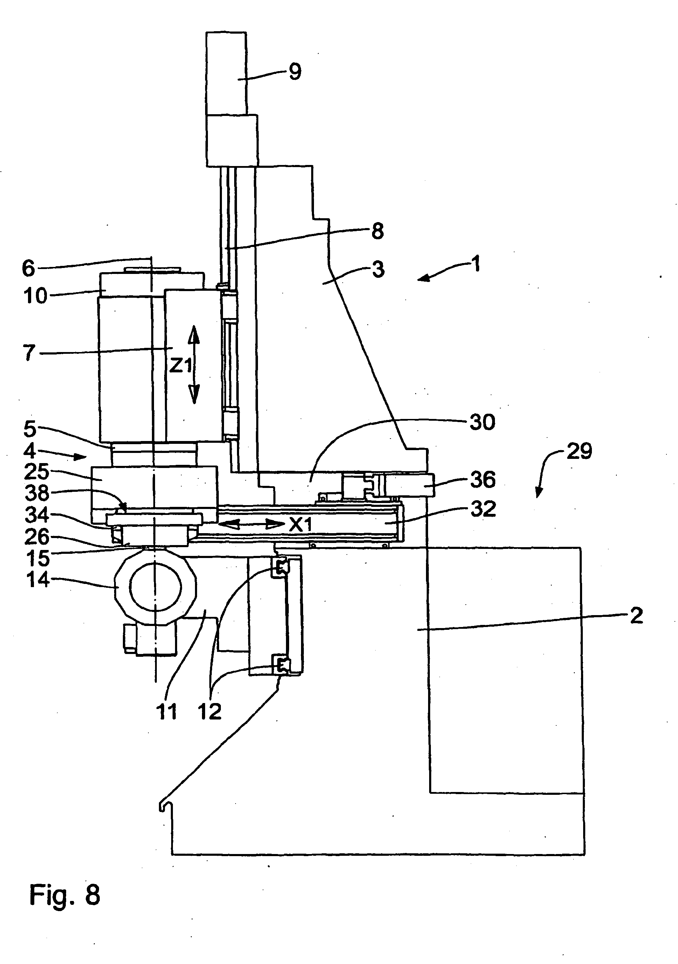

Wie in Fig. 8 dargestellt ist, ist zur Entnahme eines fertig bearbeiteten Werkstücks der erste Lade-Schlitten 32 mit der ersten Werkstück-Aufnahme 34 in den Arbeitsbereich 4 verfahren. Die Spindel 5 wird nach unten verfahren und das Werkstück 26 in der ersten Werkstück-Aufnahme 34 abgelegt. Der zweite Lade-Schlitten 33 befindet sich bereits mit einem zu bearbeitenden Werkstück 26 in einer Warteposition vor dem Arbeitsbereich 4 und wird in diesen verfahren, nachdem die Werkstück-Aufnahme-Spindel 5 wieder in ausreichendem Maße nach oben in Z1-Richtung verfahren ist. Die Werkstück-Spann-Einrichtung 25 nimmt das neue Werkstück 26 auf und der nächste Bearbeitungsvorgang kann bereits erfolgen. In den Zwischenzeiten sind die Werkzeuge 15 und 24 wieder aus ihrer Endposition am Ende einer Bearbeitung in ihrer Ausgangsposition verfahren worden. Der nächste Bearbeitungsvorgang kann bereits wieder einsetzen.

Während der Übergabe des zu bearbeitenden Werkstücks 26 an die Werkstück-Spann-Einrichtung 25 wird das bearbeitete Werkstück mit dem ersten Lade-Schlitten 32 in den Be- und Entlade-Bereich 38 verfahren und dort aus der ersten Werkstück-Aufnahme 34 entnommen. In die erste Werkstück-Aufnahme 34 wird ein weiteres zu bearbeitendes Werkstück eingesetzt. Die erste Werkstück-Aufnahme 34 wird bereits wieder in die Warteposition hinter dem Arbeitsbereich 4 verfahren.

Nach der bereits geschilderten Übergabe des in der zweiten Werkstück-Aufnahme 35 befindlichen Werkstücks 26 an die Werkstück-Spann-Einrichtung 25 wird die zweite Werkstück-Aufnahme 35 in eine Warteposition hinter den Arbeitsbereich 4 verfahren, um nach der Fertigbearbeitung des in der Werkstück-Spann-Einrichtung 25 befindlichen Werkstücks 26 sofort für die Aufnahme dieses Werkstücks 26 verfügbar zu sein.

Selbstverständlich kann der Einsatz der Lade-Einrichtung 31 auch in der Weise gesteuert werden, dass ein Lade-Schlitten 32 oder 33 mit der zugehörigen Werkstück-Aufnahme 34 oder 35 immer nur zur Zuführung eines zu bearbeitenden Werkstücks 26 und der andere Lade-Schlitten 33 oder 32 mit seiner Werkstück-Aufnahme 35 oder 34 nur zum Abtransport eines fertig bearbeiteten Werkstücks 26 eingesetzt werden kann.

## Patentansprüche

1. Vertikal-Drehmaschine
- mit einem Maschinen-Gestell (1),
- mit einer am Maschinen-Gestell (1) angeordneten Werkstück-Aufnahme-Spindel (5),
-- die an ihrem unteren Ende eine Werkstück-Spann-Einrichtung (25) zur Aufnahme eines Werkstücks (26) aufweist,
-- die mittels eines Spindel-Antriebs-Motors (10) um eine in einer Z1-Richtung verlaufende vertikale Drehachse (6) drehantreibbar ist und
-- die mittels eines Z1-Antriebs-Motors (9) nur in der Z1-Richtung verschiebbar ist,
- mit einem ersten Werkzeugträger (14) zur Aufnahme eines ersten Werkzeugs (15),
-- der nur in einer horizontalen X1-Richtung mittels eines X1-Antriebs-Motors (13) verschiebbar ist,
- mit einem zweiten Werkzeugträger (16) zur Aufnahme eines zweiten Werkzeugs (24),
-- der mittels eines X2-Antriebs-Motors (23) in einer horizontalen X2-Richtung und
-- der mittels eines Z2-Antriebs-Motors (20) in einer vertikalen Z2-Richtung verschiebbar ist,
und
- mit einer Steuer-Einheit (39) zur Ansteuerung des Spindel-Antriebs-Motors (10), des Z 1-Antriebs-Motors (9), des X1-Antriebs-Motors (13), des X2-Antriebs-Motors (23) und des Z2-Antriebs-Motors (20) während einer Dreh-Bearbeitung des Werkstücks (26).

2. Vertikal-Drehmaschine nach Anspruch 1, **dadurch gekennzeichnet,**
**dass** der erste Werkzeugträger (14) an einem nur horizontal in der X1-Richtung verschiebbaren X1-Schlitten (11) angeordnet ist.

3. Vertikal-Drehmaschine nach Anspruch 2, **dadurch gekennzeichnet,**
**dass** der zweite Werkzeugträger (16) auf einem horizontal in der X2-Richtung und vertikal in der Z2-Richtung verschiebbaren KreuzSchlitten (17) angeordnet ist.

4. Vertikal-Drehmaschine nach Anspruch 1, **dadurch gekennzeichnet,**
**dass** durch die Z1-Richtung, die X1-Richtung, die X2-Richtung und die Z2-Richtung eine gemeinsame X-Z-Ebene aufgespannt ist, in der sich die Drehachse (6) und Eingriffsstellen (27, 28) der Werkzeuge (15, 24) befinden.

5. Vertikal-Drehmaschine nach Anspruch 3, **dadurch gekennzeichnet,**
**dass** das erste Werkzeug (15) und das zweite Werkzeug (24) auf einander zugewandten Seiten des X1-Schlittens (11) und des Kreuz-Schlittens (17) angeordnet sind.

6. Vertikal-Drehmaschine nach Anspruch 1, **dadurch gekennzeichnet,**
**dass** eine quer zur X-Z-Ebene angeordnete Lade-Einrichtung (31) vorgesehen ist.

7. Vertikal-Drehmaschine nach Anspruch 6, **dadurch gekennzeichnet,**
**dass** die Lade-Einrichtung (31) in einem Lade-Tunnel (30) des Maschinen-Gestells (1) zum Arbeitsbereich (4) geführt ist.

8. Vertikal-Drehmaschine nach Anspruch 6, **dadurch gekennzeichnet,**
**dass** die Lade-Einrichtung (31) einen ersten Lade-Schlitten (32) mit einer ersten Werkstück-Aufnahme (34) und einem ersten Schlitten-Verschiebe-Motor (36) und einen zweiten Lade-Schlitten (33) mit einer zweiten Werkstück-Aufnahme (35) und einem zweiten Schlitten-Verschiebe-Motor (37) aufweist und
**dass** der erste Schlitten-Verschiebe-Motor (36) und der zweite Schlitten-Verschiebe-Motor (37) von der Steuer-Einheit (39) zur Abfuhr eines bearbeiteten Werkstücks (26) und zur Zuführung eines zu bearbeitenden Werkstücks (26) ansteuerbar sind.

9. Vertikal-Drehmaschine nach Anspruch 8, **dadurch gekennzeichnet,**
**dass** die erste Werkstück-Aufnahme (34) und die zweite Werkstück-Aufnahme (35) in Z1-Richtung übereinander angeordnet sind.

## Claims

1. A vertical lathe, comprising
- a machine frame (1);
- a workpiece accommodation spindle (5) disposed on the machine frame (1),
-- the spindle (5), at a bottom end, having a workpiece chucking device (25) for accommodation of a workpiece (26), and
-- by a spindle drive motor (10), being drivable for rotation about a vertical axis of rotation (6) that runs in a Z 1 direction, and
-- by a Z1 drive motor (9), being displaceable only in the Z1 direction;
- a first tool holder (14) for accommodation of a first tool (15),
-- the first tool holder (14) being displaceable by an X1 drive motor (13) only in a horizontal X1 direction;
- a second tool holder (16) for accommodation of a second tool (24),
-- the second tool holder (16) being displaceable by an X2 drive motor (23) in a horizontal X2 direction, and
-- by a Z2 drive motor (20), being displaceable in a vertical Z2 direction;
and
- a control unit (39) for triggering the spindle drive motor (10), the Z1 drive motor (9), the X1 drive motor (13), the X2 drive motor (23) and the Z2 drive motor (20) during rotary machining of the workpiece (26).

2. A vertical lathe according to claim 1, **characterized**
**in that** the first tool holder (14) is disposed on an X1 carriage (11) which is displaceable only horizontally in the X1 direction.

3. A vertical lathe according to claim 2, **characterized**
**in that** the second tool holder (16) is disposed on a cross slide (17) which is displaceable horizontally in the X2 direction and vertically in the Z2 direction.

4. A vertical lathe according to claim 1, **characterized**
**in that** the Z1 direction, the X1 direction, the X2 direction and the Z2 direction span a common X-Z plane where the axis of rotation (6) and places of engagement (27, 28) of the tools (15, 24) are located.

5. A vertical lathe according to claim 3, **characterized**
**in that** the first tool (15) and the second tool (24) are disposed on sides, turned towards each other, of the X carriage (11) and of the cross slide (17).

6. A vertical lathe according to claim 1, **characterized**
**in that** a feeder (31) is provided, which is disposed crosswise of the X-Z plane.

7. A vertical lathe according to claim 6, **characterized**
**in that** the feeder (31) is guided in a feed tube (30) of the machine frame (1) towards the machining area (4).

8. A vertical lathe according to claim 6, **characterized**
**in that** the feeder (31) comprises a first feeding skid (32) with a first workpiece seat (34) and a first skid-travel motor (36), and a second feeding skid (33) with a second workpiece seat (35) and a second skid-travel motor (37); and
**in that** the first skid-travel motor (36) and the second skid-travel motor (37) are triggered by the control unit (39) for discharge of a machined workpiece (26) and for feed of a workpiece (26) that is to be machined.

9. A vertical lathe according to claim 8, **characterized**
**in that** the first workpiece seat (34) and the second workpiece seat (35) are disposed one on top of the other in the Z1 direction.

## Revendications

1. Tour vertical, comprenant :
- un bâti de machine (1),
- une broche de logement de pièce à travailler (5) disposée sur le bâti de machine (1),
-- qui présente à son extrémité inférieure un dispositif de serrage de pièce à travailler (25) pour loger une pièce à travailler (26),
-- qui peut être entraînée en rotation au moyen d'un moteur d'entraînement de broche (10) autour d'un axe de rotation (6) vertical s'étendant dans une direction Z1, et
-- qui peut être déplacée au moyen d'un moteur d'entraînement Z1 (9) uniquement dans la direction Z1,
- un premier porte-outil (14) pour loger un premier outil (15),
-- qui peut être déplacé uniquement dans une direction horizontale X1 au moyen d'un moteur d'entraînement X1 (13),
- un deuxième porte-outil (16) pour loger un deuxième outil (24),
-- qui peut être déplacé au moyen d'un moteur d'entraînement X2 (23) dans une direction horizontale X2, et
-- qui peut être déplacé au moyen d'un moteur d'entraînement Z2 (20) dans une direction verticale Z2,
et
- une unité de commande (39) pour le pilotage du moteur d'entraînement de broche (10), du moteur d'entraînement Z1 (9), du moteur d'entraînement X1 (13), du moteur d'entraînement X2 (23) et du moteur d'entraînement Z2 (20) pendant un usinage rotatif de la pièce à travailler (26).

2. Tour vertical selon la revendication 1,
**caractérisé en ce que** le premier porte-outil (14) est disposé sur un chariot X1 (11) pouvant être déplacé uniquement horizontalement dans la direction X1.

3. Tour vertical selon la revendication 2,
**caractérisé en ce que** le deuxième porte-outil (16) est disposé sur un chariot croisé (17) pouvant être déplacé horizontalement dans la direction X2 et verticalement dans la direction Z2.

4. Tour vertical selon la revendication 1,
**caractérisé en ce que** la direction Z1, la direction X1, la direction X2 et la direction Z2 forment un plan X-Z commun dans lequel se trouvent l'axe de rotation (6) et les points de contact (27, 28) des outils (15, 24).

5. Tour vertical selon la revendication 3,
**caractérisé en ce que** le premier outil (15) et le deuxième outil (24) sont disposés sur des côtés tournés l'un vers l'autre du chariot X1 (11) et du chariot croisé (17).

6. Tour vertical selon la revendication 1,
**caractérisé en ce qu'**un dispositif de chargement (31) disposé transversalement au plan X-Z est prévu.

7. Tour vertical selon la revendication 6,
**caractérisé en ce que** le dispositif de chargement (31) est guidé dans un tunnel de chargement (30) du bâti de machine (1) jusqu'à la zone opérationnelle (4).

8. Tour vertical selon la revendication 6,
**caractérisé en ce que** le dispositif de chargement (31) présente un premier chariot de chargement (32) avec un premier logement de pièce à travailler (34) et un premier moteur de déplacement de chariot (36) et un deuxième chariot de chargement (33) avec un deuxième logement de pièce à travailler (35) et un deuxième moteur de déplacement de chariot (37), et
**en ce que** le premier moteur de déplacement de chariot (36) et le deuxième moteur de déplacement de chariot (37) peuvent être pilotés par l'unité de commande (39) pour l'enlèvement d'une pièce à travailler usinée (26) et pour l'amenée d'une pièce à travailler à usiner (26).

9. Tour vertical selon la revendication 8,
**caractérisé en ce que** le premier logement de pièce à travailler (34) et le deuxième logement de pièce à travailler (35) sont disposés l'un au-dessus de l'autre dans la direction Z1.
